# EUROPÄISCHE PATENTSCHRIFT

(11) **EP 1 243 367 B1**
(45) Veröffentlichungstag und Bekanntmachung des Hinweises auf die Patenterteilung: **06.06.2007**
(21) Anmeldenummer: 02405133.6
(22) Anmeldetag: 25.02.2002
(51) Int. Cl.: B23D 21/08, B26D 3/16

(54) **Rohrabschneider**
Tube cutter
Dispositif pour la coupe de tuyaux

(30) Priorität: 22.03.2001 CH 5302001
(43) Veröffentlichungstag der Anmeldung: 25.09.2002
(73) Patentinhaber: JRG Gunzenhauser AG, 4450 Sissach (CH)
(72) Erfinder: Bürli, Kurt, 4463 Buus (CH)
(74) Vertreter: Ullrich, Gerhard

(56) Entgegenhaltungen:
- US-A- 5 475 924

## Beschreibung

Die Erfindung betrifft einen Rohrabschneider gemäss dem Oberbegriff des unabhängigen Patentanspruchs.

Auf dem Gebiet der Installationstechnik und insbesondere auf dem Gebiet der Trinkwasser- und Heizungsinstallationen in Gebäuden ist es bei der Verlegung von Rohren nötig, die zu verlegenden Rohre entsprechend den jeweiligen räumlichen Gegebenheiten von einem langen Rohr abzulängen, die Rohre also auf eine gewünschte Länge abzuschneiden. Zu diesem Zweck kommen Rohrabschneider zum Einsatz (siehe z.B. US-A-5 475 924).

Rohrabschneider gibt es in zahlreichen unterschiedlichen Ausführungen, die sich je nach Durchmesser und Material, aus welchem das zu schneidende Rohr hergestellt ist, unterscheiden können. So ist beispielsweise aus dem Montagezubehör für das System JRG Sanipex® der Firma JRG Gunzenhauser AG, CH-4450 Sissach, ein Rohrabschneider bekannt (Art. Nr. 5790-04, Kombischere d12/16/20) für ein Rohr des genannten Systems JRG Sanipex®, welches Rohr ein gerilltes flexibles Aussenrohr aus Kunststoff und ein in diesem Aussenrohr angeordnetes Innenrohr (Durchmesser 12 mm, 16 mm oder 20 mm) umfasst, beispielsweise aus vernetztem Polyethylen (PE-X). In dem Innenrohr wird im Betrieb das Medium (hier: Wasser) geführt. Vom Prinzip her funktioniert dieser Rohrabschneider, wie auch schon der Name "Kombischere" sagt, wie eine Schere. Man erkennt die Funktionsweise auch aus dem Prospekt Nr. 7.96.15 WD der Firma JRG Gunzenhauser AG, in welchem auf Seite 2, Bild 1 das Ablängen des Innenrohrs dargestellt ist.

Für Rohre des gleichen Systems, aber mit grösserem Rohrdurchmesser (z.B. 25 mm, 32 mm) ist ein weiterer Typ von Rohrabschneider (Art. Nr. 5793-06) bekannt, bei welchem das abzulängende Rohr an ein Widerlager des Rohrabschneiders angelegt wird. Das Widerlager umfasst drehbar gelagerte Walzen, auf denen das abzulängende Rohr zu liegen kommt.

Zum Abschneiden des Rohrs wird zunächst an der Stelle, an der das Rohr abgeschnitten werden soll, das Rohr auf die Walzen des Widerlagers aufgelegt. Sodann wird ein sogenanntes Schneidrad, welches ebenfalls Bestandteil des Rohrabschneiders ist, mit Hilfe einer Gewindespindel und einem mit dieser Gewindespindel verbundenen Zustellorgan manuell zugestellt, bis das Schneidrad in die Wand (also in den Kunststoff) des Rohres eindringt. Das Rohr ist dadurch an der Stelle, an der das Rohr abgeschnitten werden soll, zwischen dem Schneidrad und dem Widerlager eingeklemmt. Nun wird der Rohrabschneider senkrecht zur Längsachse der Rohrs auf einem Umfang um das Rohr herum bewegt, wobei das Schneidrad jeweils in die Kunststoffwand des Rohres schneidet. Am Anfang des Schneidvorgangs lässt sich dabei der Rohrschabschneider zunächst etwas schwergängig bewegen, weil er mit höherer Schneidkraft in die Kunststoffwand hineinschneiden muss. Mit zunehmender Anzahl an Bewegungen um das Rohr herum wird der Rohrabschneider jedoch leichtgängiger. Lässt sich der Rohrabschneider schliesslich leicht um das Rohr herum bewegen, so hat das Schneidrad den Kunststoff bis auf die zugestellte Tiefe geschnitten und das Schneidrad muss manuell durch Betätigen des Zustellorgans und damit der Gewindespindel weiter zugestellt werden. Danach wird der Rohrabschneider erneut (anfangs wieder etwas schwergängiger wegen der zu Beginn höheren Schneidkraft) um das Rohr herum bewegt, wobei das Schneidrad weiter in die Kunststoffwand hinein eindringt. Diese Vorgehensweise wird so lange wiederholt, bis das Rohr an der gewünschten Stelle abgeschnitten ist und es entsteht ein saubere, gerade und glatte Schnittfläche.

Derartige Rohrabschneider existieren auch für Kupfer-, Messing- oder dünnwandige Stahlrohre und sind auch von anderen Herstellern bekannt. Allen diesen Rohrabschneidern ist jedoch gemeinsam, dass das Schneidrad stets manuell zugestellt werden muss. Da der Monteur aber nur zwei Hände hat und häufig mit einer Hand das abzulängende Rohr halten muss, muss er zum manuellen Zustellen des Schneidrads mit Hilfe des Zustellorgans bzw. der Gewinderspindel den Schneidvorgang von Zeit zu Zeit unterbrechen, das Schneidrad weiter zustellen, und kann erst dann den Schneidvorgang fortsetzen. Bei dieser manuellen Zustellung braucht der Monteur eine "erfahrene" Hand: Stellt er nämlich das Schneidrad um einen zu grossen Betrag zu, enstehen keine sauberen Schnittflächen. Ausserdem ist durch das manuelle Nachstellen zwangsläufig auch die Schneidgeschwindigkeit nicht optimal: Während nämlich am Anfang in der etwas schwergängigeren Phase noch vergleichsweise viel Material geschnitten wird, wird mit zunehmender Anzahl Bewegungen um das Rohr herum (leichtgängigere Phase) weniger Material geschnitten. Dann muss erst eine manuelle Zustellung des Schneidrades erfolgen, bevor wieder mehr Material geschnitten wird.

Hier setzt die Aufgabe der Erfindung an, indem ein Rohrabschneider vorgeschlagen werden soll, der die vorstehend genannten Nachteile nicht aufweist.

Diese Aufgabe wird durch einen Rohrabschneider gelöst, wie er durch die Merkmale des unabhängigen Patentanspruchs 1 charakterisiert ist. Besonders vorteilhafte Ausgestaltungen des erfindunsgemässen Rohrabschneiders ergeben sich aus den abhängigen Patentansprüchen.

Inbesondere umfasst der erfindungsgemässe Rohrabschneider ein erstes Element, welches mit einem Widerlager für das abzuschneidende Rohr versehen ist und eine zweites Element, welches mit einem Schneidrad versehen ist, welches relativ zu dem Widerlager des ersten Elements verstellbar ist und zwar in Richtung auf das Widerlager zu bzw. von diesem weg. Auf diese Weise wird ein an dem Widerlager anliegendes Rohr durch Verstellen des Schneidrads in Richtung auf das Widerlager zu zwischen dem Schneidrad und dem Widerlager eingeklemmt. Durch Bewegen des Rohrabschneiders um den Umfang des eingeklemmten Rohrs herum wird das eingeklemmte Rohr geschnitten. Ferner sind Mittel zum selbsttätigen Zustellen des Schneidrads in Richtung auf das Widerlager zu vorgesehen. Dadurch wird ein manuelles Nachstellen des Schneidrads vollständig obsolet.

Der Monteur kann nun also mit einer Hand das abzulängende Rohr halten, und weil das manuelle Zustellen des Schneidrads nicht mehr erforderlich ist, muss er den Schneidvorgang nicht mehr unterbrechen, um das Schneidrad weiter zustellen, sondern kann den Schneidvorgang kontinuierlich fortsetzen, bis das Rohr an der gewünschten Stelle abgeschnitten ist, wobei ebenfalls eine saubere, gerade und glatte Schnittfläche entsteht.

Ein vorteilhaftes Ausführungsbeispield des erfindungsgemässen Rohrabschneiders ist so ausgebildet, dass die Mittel zum selbsttätigen Zustellen des Schneidrads das Schneidrad während des gesamten Schneidvorgangs mit einer im wesentlichen konstanten Kraft gegen das Rohr angedrückt halten, das zwischen Schneidrad und Widerlager eingeklemmt ist.

Dies ist insofern besonders vorteilhaft, als dadurch die Schneidgeschwindigkeit praktisch stets sehr hoch ist und nicht wie beim manuellen Zustellen am Anfang in der etwas schwergängigeren Phase noch vergleichsweise viel Material geschnitten wird, während mit zunehmender Anzahl Bewegungen um das Rohr herum (leichtgängigere Phase) weniger Material geschnitten wird. Vielmehr ist es bei diesem Ausführungsbeispiel so, dass durch die im wesentlichen konstante Kraft, mit welcher das Schneidrad gegen das zu schneidende Rohr drückt, auch eine konstante Schnittgeschwindigkeit die Folge ist.

Der Rohrabschneider kann so ausgebildet sein, dass das zweite Element und das erste Element so angeordnet und miteinander verbunden sind, dass das zweite Element relativ zu dem ersten Element gegen die Rückstellkraft eines Rückstellelements aus einer ersten Endstellung, in welcher das Schneidrad relativ zum Widerlager am nächsten angeordnet ist, bis maximal zu einer zweiten Endstellung, in welcher das Schneidrad relativ zum Widerlager am weitesten entfernt angeordnet ist, bewegt werden kann. Somit kann nach dem Bewegen des zweiten Elements und damit des Schneidrads ein Rohr an das Widerlager angelegt werden. Nach dem Freigeben des zweiten Elements stellt das Rückstellelement das zweite Element, bis das Schneidrad das an dem Widerlager anliegende Rohr einklemmt und es beim Bewegen des Rohrabschneiders um das Rohr herum stets eingeklemmt hält, bis das Rohr geschnitten ist.

In einer Weiterbildung können dabei Mittel vorgesehen sein, um das zweite Element in der zweiten Endstellung - also im vollständig "geöffneten" Zustand - zu arretieren und anschliessend wieder freizugeben. Auf diese Weise kann man auf bequeme Weise bei arretiertem zweitem Element ein Rohr an dem Widerlager anlegen und positionieren, um es anschliessend nach dem Freigeben wieder einzuklemmen und den Schneidvorgang durchführen.

Der erfindungsgemässe Rohrabschneider ist vorteilhafterweise zangenartig ausgebildet. Das erste und das zweite Element sind jeweils als Arme - als ein erster Arm und als ein zweiter Arm - ausgebildet und über ein Drehgelenk miteinander verbunden. Das Widerlager ist am distalen Ende des ersten Arms und das Schneidrad am distalen Ende des zweiten Arms vorgesehen, sodass das Schneidrad durch eine Bewegung der proximalen Enden der beiden Arme aufeinander zu aus der ersten Endstellung, in der es relativ zum Widerlager am nächsten angeordnet ist, in die zweite Endstellung bewegt wird, in der es relativ zum Widerlager am weitesten entfernt angeordnet ist. Ein derartiger Rohrabschneider ist vom Handling her besonders vorteilhaft.

Vorteilhaft ist es auch, wenn das Widerlager durch drei Walzen oder Walzenpaare gebildet ist, welche in einem Abstand voneinander auf einem Kreisbogen angeordnet sind. Dadurch können Rohre mit verschieden grossen Durchmessern sehr gut geschnitten werden. Je nachdem, wie gross der Durchmesser des zu schneidenden Rohres ist, liegt dieses immer an zwei Walzen bzw. Walzenpaaren an, wobei die Walzenpaare, an denen das Rohr jeweils anliegt, durchaus verschieden sein können, abhängig vom Durchmesser der zu schneidenden Rohres. Eine wie auch immer geartete Anpassung des Rohrabschneiders an die Grösse des Durchmessers des abzuschneidenden Rohrs ist nicht erforderlich.

Weitere vorteilhafte Ausgestaltungen ergeben sich aus der nachfolgenden Beschreibung von Ausführungsbeispielen des erfindungsgemässen Rohrabschneiders anhand der Zeichnung.

Es zeigen:
- Fig. 1: ein Ausführungsbeispiel eines erfindungsgemässen Rohrabschneiders nach Art einer Zange in maximal geöffnetem Zustand, in perspektivischer Darstellung
- Fig. 2: den Rohrabschneider aus Fig. 1 im Längsschnitt, ebenfalls in maximal geöffnetem Zustand,
- Fig. 3: den Rohrabschneider aus Fig. 1 im Längsschnitt, in geschlossenem Zustand (Ruhestellung)
und
- Fig. 4: den Rohrabschneider aus Fig. 1 im Längsschnitt mit einem zwischen Schneidrad und Widerlager eingeklemmten abzuschneidenden Rohr.

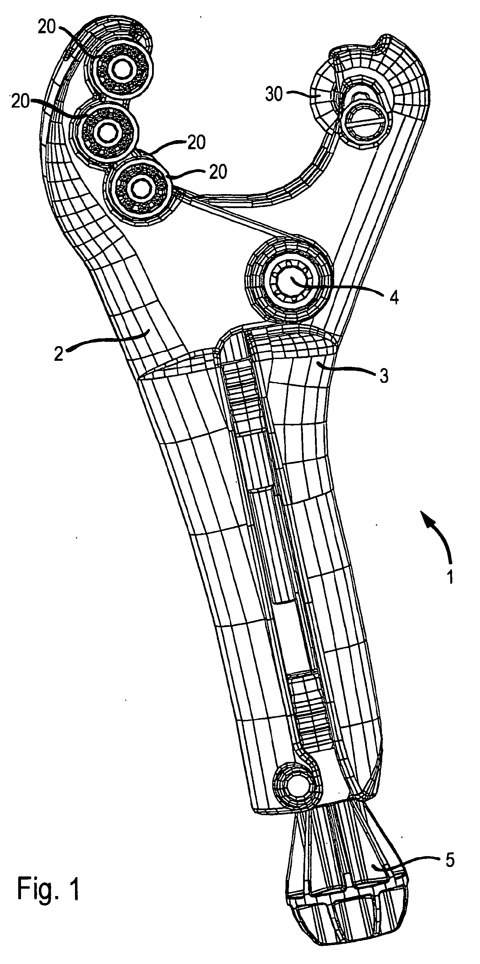

In Fig. 1 ist ein Ausführungsbeispiel eines erfindungsgemässen Rohrabschneiders 1 nach Art einer Zange in einer perspektivischen Ansicht zu erkennen, und zwar in maximal "geöffnetem" Zustand. Der Rohrabschneider 1 umfasst ein erstes Element in Form eines ersten Arms 2, welcher an seinem distalen Ende mit einem Widerlager in Form von drei Walzenpaaren 20 versehen ist (in Fig. 1 ist - mit einer Ausnahme - jeweils nur eine Walze eines Walzenpaars 20 zu erkennen). Ferner umfasst der Rohrabschneider 1 ein zweites Element in Form eines zweiten Arms 3, welches an seinem distalen Ende mit einem Schneidrad 30 versehen ist. Die beiden Arme 2,3 sind über ein Drehgelenk 4 miteinander verbunden. Ferner erkennt man in Fig. 1 noch einen Knauf 5 am proximalen Ende des Rohrabschneiders 1.

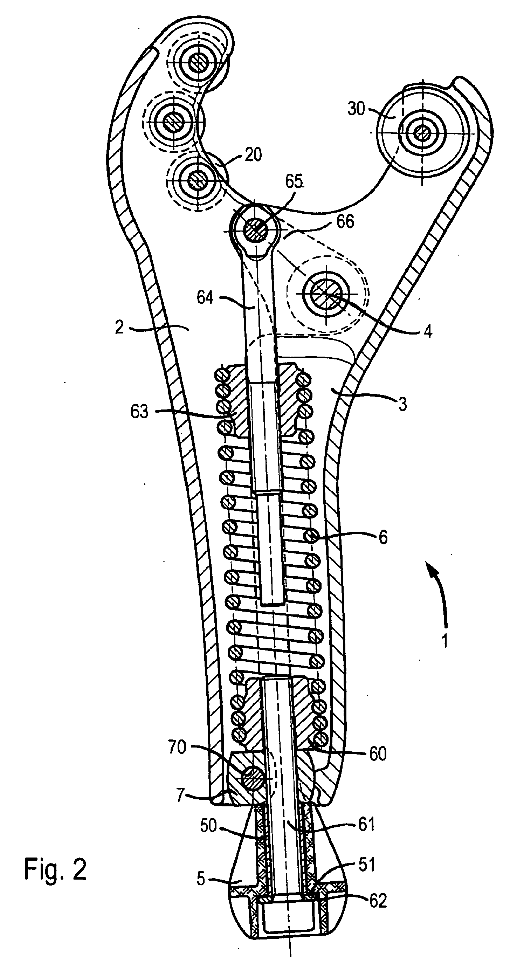

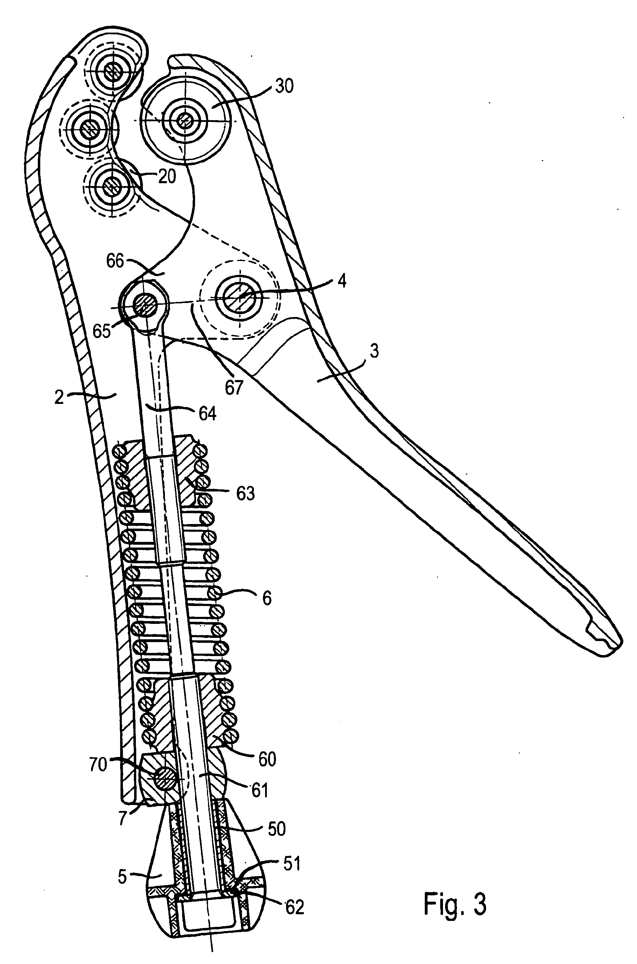

In Fig. 2 ist der Rohrabschneider 1 aus Fig. 1 im Längsschnitt dargestellt, ebenfalls in maximal "geöffnetem" Zustand, während der Rohrabschneider 1 in Fig. 3 im "geschlossenen" Zustand (Ruhestellung) gezeigt ist. Ausgehend von der Ruhestellung (erste Endstellung) gemäss Fig. 3 wird der in Fig. 2 gezeigte maximal geöffnete Zustand (zweite Endstellung) erreicht, indem die proximalen Enden der beiden Arme 2,3 aufeinander zu bewegt werden.

Diese Bewegung der beiden proximalen Enden der Arme 2,3 aufeinander zu erfolgt gegen die Kraft einer Feder 6. Die Feder 6 wird nämlich beim Öffnen des Rohrabschneiders 1, also dann, wenn das Schneidrad 30 von den Walzenpaaren 20 des Widerlagers weg bewegt wird, stärker gedehnt, wodurch die Rückstellkraft der Feder 6 erhöht wird. Bei dieser Bewegung der proximalen Enden der beiden Arme 2,3 aufeinander zu kann jede Zwischenstellung zwischen der ersten Endstellung (Fig. 3) und der zweiten Endstellung (Fig. 1, Fig.2) eingenommen werden.

Das proximale Ende der Feder 6 ist auf einem ersten Haltestück 60 angeordnet. Das erste Haltestück 60 ist mit einem Innengewinde versehen und ist auf das Aussengewinde einer Schraube 61 aufgeschraubt, welche sich durch eine im den Knauf 5 angeordnete Hülse 50 und durch einen Anschlag 7 hindurch erstreckt, der um eine Achse 70 herum schwenkbar am proximalen Ende des ersten Arms 2 angebracht ist. Der Kopf der Schraube 61 stützt sich über eine Unterlegscheibe 62 auf einer Schulter 51 im Knauf 5 ab. Im zusammengesetzten Zustand ist die Schraube 61 so weit in das Innengewinde des Haltestücks 60 eingeschraubt, dass der Knauf 5 von der einen Seite und das erste Haltestück 60 von der anderen Seite her an dem Anschlag 7 anliegen.

Das distale Ende der Feder 6 ist auf einem zweiten Haltestück 63 angeordnet. Dieses Haltestück weist ebenfalls ein Innengewinde auf, welches auf das Aussengewinde einer Mitnehmerstange 64 aufgeschraubt ist. Am distalen Ende sitzt die Mitnehmerstange 64 auf einer Achse 65 , welche ihrerseits auf einem Nocken 66 vorgesehen ist, der zusammen mit dem zweiten Arm 3 um das Drehgelenk 4 herum schwenkbar gelagert ist.

Mit Hilfe von Fig. 2 und Fig. 3 soll im folgenden erläutert werden, wie der Übergang aus dem "geschlossenen" Zustand (erste Endstellung) gemäss Fig. 3 in den maximal "geöffneten" Zustand gemäss Fig. 2 erfolgt. Zunächst ist festzuhalten, dass im geschlossenen Zustand (Fig. 3) das proximale Ende der Mitnehmerstange 64 an dem distalen Ende der Schraube 61 anliegt. Die Feder 6 ist in diesem Zustand immer noch vorgespannt und würde das Schneidrad 30 noch weiter in Richtung auf die Walzenpaare 20 zu bewegen, wenn nicht das proximale Ende der Mitnehmerstange 64 durch das Anliegen am distalen Ende der Schraube 61 dies verhindern würde. Zum Öffnen des Rohrabschneiders 1 werden nun die proximalen Enden des ersten und zweiten Armes 2,3 aufeinander zu bewegt. Dies erfolgt um das Drehgelenk 4 herum. Dabei wird auch der am zweiten Arm vorgesehene Nocken 66 und die dort vorgesehene Achse 65, auf welcher das distale Ende der Mitnehmerstange 64 sitzt, um das Drehgelenk 4 herum geschwenkt. Dadurch wird die Mitnehmerstange 64, auf deren Aussengewinde das zweite Haltestück 63 aufgeschraubt ist, mitbewegt. Die Feder 6 wird somit stärker gespannt. Das proximale Ende der Mitnehmerstange 64 wird dabei von dem distalen Ende der Schraube 61 abgehoben. Ist das proximale Ende des zweiten Arms 3 vollständig auf das proximale Ende des ersten Arms 2 zu bewegt worden, so ist der maximal geöffnete Zustand des Rohrabschneiders 1 (zweite Endstellung) gemäss Fig. 2 erreicht. Ein weiteres Öffnen des Rohrabschneiders 1 - also ein weiteres Wegbewegen des Schneidrads 30 von den Walzenpaaren 20 des Widerlagers - ist nicht möglich.

Optional können Mittel vorgesehen sein, um den zweiten Arm 3 im maximal geöffneten Zustand gemäss Fig. 2 zu arretieren. Dies könnte z.B. eine Einkerbung in dem Nocken 66 sein, in welche eine Klinke oder ein Stift einklinkbar ist, welche eine Verriegelung des Rohrabschneiders 1 in dieser Position bewirkt und ein automatisches Rückstellen des zweiten Arms 3 mit Hilfe der Feder 6 verhindert. Auch andere Möglichkeiten einer solchen Arretierung sind denkbar, in den Figuren ist eine derartige Arretierung jedoch nicht dargestellt. Eine derartige Arretierung erlaubt es, bei maximal geöffnetem Rohrabschneider 1 ein zu schneidendes Rohr an den Walzenpaaren 20 des Widerlagers anzulegen und dann die Arretierung wieder zu lösen, sodass das zu schneidende Rohr zwischen dem Schneidrad 30 und den Walzenpaaren 20 des Widerlagers eingeklemmt wird, weil die Feder 6 den zweiten Arm 3 zurückstellt.

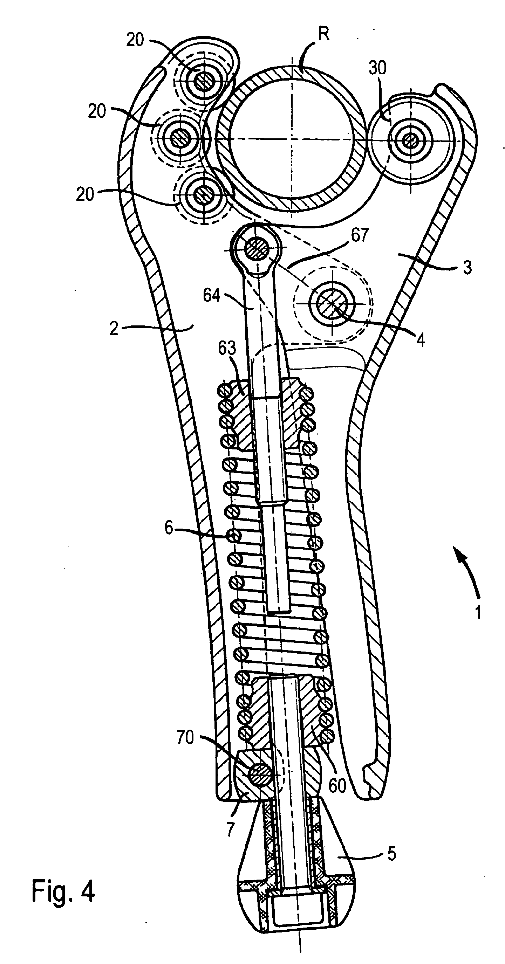

Schliesslich ist in Fig. 4 der Rohrabschneider 1 dargestellt, bei welchem zwischen dem Schneidrad 30 und den Walzenpaaren 20 des Widerlagers ein abzuschneidendes Rohr R eingeklemmt ist. Man erkennt, dass das Rohr R auf zwei Walzenpaaren aufliegt und als dritter Fixationspunkt das Schneidrad 30 wirkt (Dreipunktauflage). Da die Feder 6 gespannt ist, wird das Rohr R eingeklemmt gehalten. Zum Abschneidern kann nun beispielsweise der Monteur mit der einen Hand das Rohr R halten und mit der anderen Hand den Knauf 5 greifen und den Rohrabschneider 1 um das Rohr R herum bewegen. Da die Feder 6 auch beim weiteren Eindringen des Schneidrads 30 in die Wand des Rohrs R stets gespannt ist, bleibt das Rohr R immer fest zwischen dem Schneidrad 30 und den Walzenpaaren 20 eingespannt und der Schneidvorgang geht so lange weiter, bis das Rohr R durchgeschnitten ist. Es ensteht eine saubere, glatte Schnittfläche.

Man erkennt in Fig. 4 ausserdem, dass unabhängig vom Rohrdurchmesser (solange zulässige Rohrdurchmesser verwendet werden) das Rohr R praktisch immer (auch bei kleineren Rohrdurchmessern als in Fig. 4 dargestellt) auf zwei Walzenpaaren 20 aufliegt und zwischen dem Schneidrad 30 und den jeweiligen zwei Walzenpaaren 20 eingespannt ist. Die Walzenpaare 20 sind dabei in einem Abstand voneinander etwa auf einem Teil eines Kreisbogens angeordnet.

Durch geeignete Dimensionierung der Federkonstante der Feder 6, des Hebelarms 67 zwischen dem Drehgelenk 4 und der Achse 65 sowie des Hebelarms 68 zwischen dem Drehgelenk 4 und dem Schneidrad 30, wird erreicht, dass die Kraft, mit welcher das Schneidrad 30 gegen das Rohr R angedrückt gehalten wird, im wesentlichen konstant bleibt, wodurch eine etwa konstante Schneidgeschwindigkeit erreicht wird.

Damit die Kraft, mit welcher das Scneidrad 30 gegen das Rohr R angedrückt gehalten wird, im wesentlichen konstant bleibt, muss auch das Moment um das Drehgelenk 4 herum im wesentlichen konstant bleiben. Das Moment um das Drehgelenk 4 herum wird durch die Rückstellkraft der Feder 6 und durch den Hebelarm 67 zwischen dem Drehgelenk 4 und der Achse 65 bestimmt. Dabei ist zu berücksichtigen, dass für das Moment immer nur derjenige Hebelarm relevant ist, welcher senkrecht auf der Rückstellkraft der Feder steht, weshalb bei der Berechnung des (Rückstell-)Moments ausser dem Produkt aus der (Rückstell-)Kraft der Feder 6 und dem Hebelarm 67 auch immer der Sinus des Winkels eingeht, der von dem Hebelarm 67 und der Normalen auf die Richtung der Rückstellkraft (dies entspricht hier der Richtung der Längsachse der Feder 6) eingeschlossen wird. Wie man durch Betrachten von Fig. 4 leicht erkennt, ändert sich dieser Winkel, der von dem Hebelarm 67 und der Normalen auf die Längsachse der Feder 6 eingeschlossen wird, mit zunehmendem Öffnen des Rohrabschneiders 1.

Das jeweilige über die Rückstellkraft der Feder 6 und den Hebelarm 67 erzeugte Rückstellmoment bestimmt die Kraft, mit welcher das Schneidrad 30 gegen das Rohr R angedrückt wird. Da nämlich bei angedrücktem Schneidrad 30 Momentengleichgewicht herrschen muss, ergibt sich am Schneidrad 30 ein entsprechendes (Gegen-)Moment. Dieses Gegenmoment ergibt sich wiederum aus der Schneidkraft (das ist die Kraft, mit welcher das Schneidrad 30 gegen das Rohr R angedrückt wird) und dem zugehörigen Hebelarm, wobei wieder nur derjenige Hebelarm relevant ist, der senkrecht auf der Schneidkraft steht. Bei einer Ausbildung des Rohrabschneiders wie er in Fig. 1 bis Fig. 4 dargestellt ist und bei entsprechender Dimensionierung wird nun erreicht, dass diese Schneidkraft im wesentlichen konstant ist. Dadurch wiederum wird erreicht, dass die Schneidgeschwindigkeit etwa konstant ist, und zwar ohne dass der Monteur das Schneidrad manuell nachstellen muss.

Zum Abschneiden des Rohrs kann der Monteur nach dem Einklemmen des Rohrs R zwischen dem Schneidrad 30 und den Walzenpaaren 20 des Widerlagers den Rohrabschneider 1 am Knauf 5 greifen und ihn um das Rohr R herum bewegen, wodurch ein kontinuierliches Schneiden des Rohrs R erfolgt. Es entsteht auf diese Weise eine saubere, glatte Schnittfläche. Die eingangs erwähnten Nachteile sind behoben und das Handling ist für den Monteur wesentlich vereinfacht.

## Patentansprüche

1. Rohrabschneider **(1),** der zangenartiger ausgebildet ist und besteht aus:
a) einem ersten Arm **(2)** und einem zweiten Arm **(3),** welche über ein Drehgelenk **(4)** miteinander verbunden sind;
b) einem am distalen Ende des ersten Arms **(2)** angeordneten Widerlager, welches von zueinander beabstandeten Walzen **(20)** gebildet wird und der Auflage eines abzuschneidenden Rohrs **(R)** dient;
c) einem Schneidrad **(30),** welches relativ im Abstand zu den Walzen **(20)** verstellbar ist;
d) einem zwischen dem ersten Arm **(2)** und dem zweiten Arm **(3)** wirkenden Rückstellelement **(6),** welches die proximalen Enden beider Arme **(2,3)** in eine erste Endstellung mit der weitesten Spreizung der proximalen Enden beider Arme **(2,3)** und dem kleinsten Abstand zwischen dem Schneidrad **(30)** und den Walzen **(20)** drückt; und
e) sich gegen die Wirkung des Rückstellelements **(6)** die proximalen Enden beider Arme **(2,3)** bis in eine zweite Endstellung mit der geringsten Spreizung der proximalen Enden beider Arme **(2,3)** und dem weitesten Abstand zwischen dem Schneidrad **(30)** und den Walzen **(20)** bewegen lassen, um zwischen den Walzen **(20)** und dem Schneidrad **(30)** das eingeklemmte Rohr **(R)** zu fassen, welches der Schneidkraft des sich selbst zustellenden Schneidrads **(30)** ausgesetzt ist und sich durch Drehen des Rohrabschneiders **(1)** um den Umfang des Rohrs **(R)** schneiden lässt, **dadurch gekennzeichnet, dass**
f) das Rückstellelement **(6)** sich einerseits am ersten Arm **(2)** abstützt und andererseits auf einer Achse **(65)** angelenkt ist, welche durch einen sich vom zweiten Arm **(3)** erstreckenden Nocken **(66)** verläuft und zum Drehgelenk **(4)** hin einen Hebelarm **(67)** bildet; und
g) das Schneidrad **(30)** fest am distalen Ende des zweiten Arms **(3)** angeordnet ist.

2. Rohrabschneider **(1)** nach Anspruch 1, **dadurch gekennzeichnet, dass** die Achse **(65)** derart positioniert ist, dass sie beim Betätigen des Rohrabschneiders **(1)** hin zur zweiten Endstellung mit der geringsten Spreizung der proximalen Enden beider Arme **(2,3)** und dem weitesten Abstand zwischen dem Schneidrad **(30)** und den Walzen **(20)** sich dem von den Walzen **(20)** gebildeten Widerlager annähert.

3. Rohrabschneider **(1)** nach einem der Ansprüche 1 und 2, **dadurch gekennzeichnet, dass** das Widerlager drei im Kreisbogen angeordnete Walzen **(20)** oder Walzenpaare **(20)** hat.

4. Rohrabschneider **(1)** nach einem der Ansprüche 1 bis 3, **dadurch gekennzeichnet, dass** das Rückstellelement **(6)**
a) als Schraubenfeder ausgebildet ist, die sich einerseits am proximalen Ende des ersten Arms **(2)** abstützt; und
b) innenseitig entlang des ersten Arms **(2)** angeordnet ist.

5. Rohrabschneider **(1)** nach einem der Ansprüche 1 bis 4, **dadurch gekennzeichnet, dass** Mittel vorgesehen sind, um den zweiten Arm **(3)** in der zweiten Endstellung zu arretieren und wieder freizugeben, um bei arretiertem zweitem Arm **(3)** ein Rohr **(R)** an dem von den Walzen **(20)** oder Walzenpaaren **(20)** gebildeten Widerlager anlegen zu können und es anschliessend nach dem Freigeben wieder einklemmen zu können.

6. Rohrabschneider **(1)** nach einem der Ansprüche 1 bis 5, **dadurch gekennzeichnet, dass** am proximalen Ende eines der Arme **(2,3),** vorzugsweise am ersten Arm **(2),** ein drehbarer Knauf **(5)** angeordnet ist, welcher zur erleichterten Drehbewegung des Rohrabschneiders **(1)** beim Schneidvorgang dient.

## Claims

1. Tube cutter **(1),** which is executed as a pair of tongs and consists of:
a) a first arm **(2)** and a second arm **(3),** which are connected to one another via a swivel joint **(4);**
b) an abutment arranged at the distal end of the first arm **(2),** which abutment is formed by rollers **(20)** situated at a certain distance in relation to one another and serves to support a pipe **(R)** intended for cutting;
c) a cutter wheel **(30),** which is adjustable relatively in respect of its distance to the rollers **(20);**
d) a resetting element **(6)** acting between the first arm **(2)** and the second arm **(3),** which element pushes the proximal ends of both arms **(2,3)** into a first end position with the broadest spread of the proximal ends of both arms **(2,3)** and the smallest distance between the cutter wheel **(30)** and the rollers **(20);** and
e) the proximal ends of both arms **(2,3)** are caused to be displaced against the effect of the resetting element **(6)** into a second end position with the smallest spread of the proximal ends of both arms **(2,3)** and the furthest distance between the cutter wheel **(30)** and the rollers **(20),** in order to grip the clamped pipe **(R)** between the rollers **(20)** and the cutter wheel **(30),** which pipe is subjected to the cutting force of the self-adjusting cutter wheel **(30)** and can be cut by causing the pipe cutter **(1)** to rotate around the circumference of the pipe **(R), characterized in that**
f) the resetting element **(6)** is supported on the one hand on the first arm **(2)** and on the other hand is articulated on an axis **(65),** which runs through a cam **(66)** extending from the second arm **(3)** and constitutes a lever arm **(67)** as far as the articulated link **(4);** and
g) the cutter wheel **(30)** is arranged securely at the distal end of the second arm **(3).**

2. Tube cutter **(1)** according to Claim 1, **characterized in that** the axis (65) is positioned in such a way that it moves close to the abutment formed by the rollers **(20)** upon actuation of the pipe cutter **(1)** as far as the second end position with the smallest spread of the proximal ends of both arms **(2,3)** and the furthest distance between the cutter wheel **(30)** and the rollers **(20).**

3. Tube cutter **(1)** according to either of Claims 1 and 2, **characterized in that** the abutment has three rollers **(20)** or pairs of rollers **(20)** arranged in a circular arc.

4. Tube cutter **(1)** according to one of Claims 1 to 3, **characterized in that** the resetting element **(6)**
a) is configured as a helical spring, which is supported on the one hand at the proximal end of the first arm **(2);** and
b) is arranged on the inside along the first arm **(2).**

5. Tube cutter **(1)** according to one of Claims 1 to 4, **characterized in that** means are provided for locking the second arm **(3)** in the second end position and for releasing it once more, in order, with the second arm **(3)** locked, to enable a pipe **(R)** to be brought into contact with the abutment formed by the rollers **(20)** or the pairs of rollers **(20)** and to enable it to be clamped again after its release.

6. Tube cutter **(1)** according to one of Claims 1 to 5, **characterized in that** a rotatable knob **(5)** is arranged at the proximal end of one of the arms **(2,3),** preferably on the first arm **(2),** which knob serves to facilitate the rotating movement of the pipe cutter **(1)** during the cutting process.

## Revendications

1. Dispositif **(1)** pour couper des tuyaux, qui est réalisé en forme de pince et comprenant:
a) un premier bras **(2)** et un deuxième bras **(3)** qui sont connectés l'un à l'autre par le biais d'une liaison pivotante **(4);**
b) une butée disposée à l'extrémité distale du premier bras **(2),** laquelle est formée de rouleaux **(20)** espacés l'un de l'autre et qui sert à supporter un tuyau à couper **(R);**
c) une lame de coupe circulaire **(30)** qui peut être déplacée relativement aux rouleaux **(20);**
d) un élément de rappel **(6)** agissant entre le premier bras **(2)** et le deuxième bras **(3),** qui presse les extrémités proximales des deux bras **(2,3)** dans une première position d'extrémité avec l'écartement le plus grand des extrémités proximales des deux bras **(2,3)** et la distance la plus petite entre la lame de coupe circulaire **(30)** et les rouleaux **(20);** et
e) où les extrémités proximales des deux bras **(2,3)** peuvent être déplacées à l'encontre de l'effet de l'élément de rappel **(6)** jusque dans une deuxième position d'extrémité avec l'écartement le plus faible des extrémités proximales des deux bras **(2,3)** et la distance la plus grande entre la lame de coupe circulaire **(30)** et les rouleaux **(20),** afin de saisir le tuyau serré **(R)** entre les rouleaux **(20)** et la lame de coupe circulaire **(30),** qui est exposé à la force de coupe de la lame de coupe circulaire **(30)** autoajustable et peut être coupé par rotation du dispositif **(1)** pour couper les tuyaux autour de la périphérie du tuyau **(R), caractérisé en ce que**
f) l'élément de rappel **(6)** s'appuie d'une part sur le premier bras **(2)** et d'autre part est articulé sur un axe **(65)** qui s'étend à travers une came **(66)** s'étendant depuis le deuxième bras **(3)** et qui forme vers la liaison pivotante **(4)** un bras de levier **(67);** et
g) la lame de coupe circulaire **(30)** est disposée fixement à l'extrémité distale du deuxième bras **(3).**

2. Dispositif **(1)** pour couper des tuyaux selon la revendication 1, **caractérisé en ce que** l'axe **(65)** est positionné de telle sorte qu'il se rapproche de la butée formée par les rouleaux **(20)** lors de l'actionnement du dispositif **(1)** pour couper des tuyaux vers la deuxième position d'extrémité avec le plus petit écartement des extrémités proximales des deux bras **(2,3)** et la plus grande distance entre la lame de coupe circulaire **(30)** et les rouleaux **(20).**

3. Dispositif **(1)** pour couper des tuyaux selon l'une quelconque des revendications 1 ou 2, **caractérisé en ce que** la butée a trois rouleaux **(20)** ou paires de rouleaux **(20)** disposés en arc de cercle.

4. Dispositif **(1)** pour couper des tuyaux selon l'une quelconque des revendications 1 à 3, **caractérisé en ce que** l'élément de rappel **(6)**
a) est réalisé sous forme de ressort à boudin qui s'appuie d'une part à l'extrémité proximale du premier bras **(2);** et
b) est disposé du côté intérieur le long du premier bras **(2).**

5. Dispositif **(1)** pour couper des tuyaux selon l'une quelconque des revendications 1 à 4, **caractérisé en ce que** des moyens sont prévus pour bloquer le deuxième bras **(3)** dans la deuxième position d'extrémité et le libérer à nouveau afin de pouvoir placer un tuyau **(R)** sur la butée formée par les rouleaux **(20)** ou les paires de rouleaux **(20)** lorsque le deuxième bras **(3)** est bloqué, et pour pouvoir ensuite le serrer à nouveau après sa libération.

6. Dispositif **(1)** pour couper des tuyaux selon l'une quelconque des revendications 1 à 5, **caractérisé en ce qu'**une tête rotative **(5)** est disposée à l'extrémité proximale de l'un des bras **(2,3),** de préférence sur le premier bras **(2),** laquelle sert à faciliter le mouvement de rotation du dispositif **(1)** pour couper des tuyaux lors de l'opération de coupe.
